# EUROPÄISCHE PATENTSCHRIFT

(11) **EP 1 915 674 B1**
(45) Veröffentlichungstag und Bekanntmachung des Hinweises auf die Patenterteilung: **08.09.2010**
(21) Anmeldenummer: 06777939.7
(22) Anmeldetag: 24.07.2006
(51) Int. Cl.: G06F 9/38, G06F 11/16

(54) **VERFAHREN UND VORRICHTUNG ZUR STEUERUNG EINES RECHNERSYSTEMS MIT WENIGSTENS ZWEI AUSFÜHRUNGSEINHEITEN UND MIT WENIGSTENS ZWEI GRUPPEN VON INTERNEN ZUSTÄNDEN**
METHOD AND DEVICE FOR CONTROLLING A COMPUTER SYSTEM COMPRISING AT LEAST TWO EXECUTION UNITS AND AT LEAST TWO GROUPS OF INTERNAL STATES
PROCEDE ET DISPOSITIF POUR COMMANDER UN SYSTEME INFORMATIQUE COMPRENANT AU MOINS DEUX UNITES D'EXECUTION ET AU MOINS DEUX GROUPES D'ETATS INTERNES

(30) Priorität: 08.08.2005 DE 102005037244
(43) Veröffentlichungstag der Anmeldung: 30.04.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064598
(87) Internationale Veröffentlichungsnummer: WO 2007/017370

(56) Entgegenhaltungen:
- DE-A1- 10 332 700
- DE-A1- 10 349 581
- US-A- 4 823 256
- US-B1- 6 615 366
- US-B1- 6 640 313

## Beschreibung

### Stand der Technik

Die Erfindung betrifft eine Vorrichtung und ein Verfahren zur Umschaltung zwischen wenigstens zwei Betriebsmodi eines Multiprozessorsystems mit wenigstens zwei Ausführungseinheiten bzw. CPUs sowie ein entsprechendes Prozessorsystem gemäß den Oberbegriffen der unabhängigen Ansprüche.

Transiente Fehler, ausgelöst durch Alpha-Teilchen oder kosmische Strahlung, werden zunehmend ein Problem für integrierte Halbleiterschaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen, insbesondere im Kraftfahrzeug, müssen solche Fehler daher zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden bei den entsprechenden Steuereinrichtungen solcher Systeme üblicherweise Redundanzen zur Fehlererkennung eingesetzt. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Ein Mikrocontroller besteht einerseits aus Speichermodulen (z.B. RAM, ROM, Cache), aus einem Core (CPU) und aus Ein- /Ausgangs-Schnittstellen, so genannten Peripherals (z.B. A/D-Wandler, CAN-Schittstelle). Da Speicherelemente mit Prüfcodes (Parity oder ECC) effektiv überwacht werden können, und Peripherals oft anwendungsspezifisch als Teil eines Sensor- oder Aktor-Signalpfades überwacht werden, besteht ein weiterer Redundanzansatz in der alleinigen Verdopplung der Cores eines Mikrocontrollers.

Solche Mikrocontroller mit wenigstens zwei integrierten Cores sind auch als Dual-Core oder Multi-Core Architekturen bekannt. Beide Cores führen redundant und taktsynchron das gleiche Programmsegment aus, die Ergebnisse der beiden Cores werden verglichen, und ein Fehler wird dann bei dem Vergleich auf Übereinstimmung erkannt werden. Im Folgenden wird diese Konfiguration eines Dual-Core Systems als Vergleichsmodus bezeichnet.

Dual-Core Architekturen werden in anderen Anwendungen auch zur Performanz-Steigerung eingesetzt. Beide Cores führen unterschiedliche Programme, Programmsegmente oder Befehle aus, wodurch sich eine Leistungssteigerung erzielen lässt, weshalb diese Konfiguration eines Dual-Core Systems als Performanzmodus bezeichnet wird.

Eine Erweiterung dieser Systeme kann mittels einer Umschaltung erreicht werden, d.h. je nach Anwendungszweck des Multiprozessorsystem kann dieses in einem Vergleichsmodus oder in einem Performanzmodus betreiben werden. Im Vergleichsmodus werden die Ausgangsignale der Cores miteinander verglichen. Bei einer Differenz wird ein Fehlersignal ausgegeben. Im Performanzmodus arbeiten die beiden Cores als ein symmetrisches Mehrprozessorsystem (SMP) und führen unterschiedliche Programme, Programmsegmente oder Befehle aus. Die Vergleichseinheit ist im diesem Modus nicht aktiv.

In vielen Anwendungen werden so genannte Prozessorzustände verwendet, wie beispielsweise ein User-Modus oder Supervisor Modus. Besonders gut kann man Anforderungen der Anwendung dann in einer Art erfüllen, die über den bekannten Stand der Technik hinausgeht, wenn man darüber hinaus die möglichen Betriebsmodi des Prozessorsystems berücksichtigt. Es ist deshalb Aufgabe der Erfindung, Mittel und Verfahren zur Verfügung zu stellen, die eine gemeinsame Optimierung der Prozessorzustände und der Betriebsmodi ermöglichen.

Aus der DE 103 32 700 A1 ist ebenfalls ein Rechnersystem mit zwei Ausführungseinheiten bekannt, wobei der Betriebsmodus an die Ausführung von vorgegebenen Speicheradressen geknüpft ist. Aus der US 6,615,366 ist bereits ein Rechnersystem mit zwei Ausführungseinheiten bekannt, die in einem Sicherheitsmodus und einem Performanzmodus betrieben werden können. Die Auswahl des jeweiligen Betriebsmodus erfolgt durch Umschaltbefehle, die Teil der Anwendungssoftware oder des Betriebssystems sein können. Aus der US 4,823,256 ist ein Rechnersystem mit zwei Ausführungseinheiten bekannt, wobei in einem ersten Betriebsmodus nur einer der Rechner aktiv und der andere inaktiv ist oder in einem zweiten Betriebsmodus beide Rechner aktiv sind und unterschiedliche Aufgaben abarbeiten. Die Auswahl des Betriebsmodus erfolgt durch entsprechende Anforderungen an das Rechensystem.

### Vorteile der Erfindung

Vorteilhafterweise verwendet man ein Verfahren wie im Anspruch 1 beansprucht zur Steuerung eines Rechnersystems mit wenigstens zwei Ausführungseinheiten und mit wenigstens zwei Gruppen von internen Zuständen, insbesondere Prozessorzuständen, in wenigstens einer der Ausführungseinheiten, und mit Umschaltmitteln, durch welche zwischen wenigstens zwei unterschiedlichen Betriebsmodi, insbesondere einem Performanzmodus und einem Vergleichsmodus, des Rechnersystems umgeschaltet werden kann, **dadurch gekennzeichnet, dass** eine Umschaltung dadurch ausgelöst wird, dass wenigstens eine Ausführungseinheit ihren internen Zustand wechselt. Vorteilhafterweise verwendet man ein Verfahren, bei dem im User Mode der Prozessoreinheiten (d.h. in dem Prozessorzustand, in dem Anwenderprogramme abgearbeitet werden) das Multiprozessorsystem in einem Vergleichsmodus betrieben wird und dass die Umschaltung in den Performanzmodus durch einen Wechsel des Prozessorzustandes in wenigstens einer Ausführungseinheit getriggert wird.

Vorteilhafterweise verwendet man ein Verfahren, bei dem die Ausführungseinheit, die durch einen Wechsel ihres Zustands eine Umschaltung initiiert, ein Signal erzeugt, welches die Umschaltung der wenigstens einen weiteren Ausführungseinheit triggert.

Vorteilhafterweise verwendet man ein Verfahren, bei dem die Zustände mit abgespeicherten Referenzwerten verglichen werden und abhängig vom Vergleich Umschaltsignale erzeugt werden.

Vorteilhafterweise verwendet man ein Verfahren, bei dem der Vergleich zyklisch erfolgt

Vorteilhafterweise verwendet man ein Verfahren, bei dem der Vergleich immer bei Änderung eines Zustands erfolgt

Vorteilhafterweise verwendet man ein Verfahren, bei dem der interne Zustand einer Ausführungseinheit durch wenigstens ein Bit in einem Register dieser Ausführungseinheit angezeigt wird.

Vorteilhafterweise verwendet man eine Vorrichtung wie im Anspruch 7 beansprucht zur Steuerung eines Rechnersystems mit wenigstens zwei Ausführungseinheiten und mit wenigstens zwei Gruppen von internen Zuständen, insbesondere Prozessorzuständen, in wenigstens einer der Ausführungseinheiten, und mit Umschaltmitteln, durch welche zwischen wenigstens zwei unterschiedlichen Betriebsmodi, insbesondere einem Performanzmodus und einem Vergleichsmodus, des Rechnersystems umgeschaltet werden kann, **dadurch gekennzeichnet, dass** die Umschaltmittel derart ausgestaltet sind, dass eine Umschaltung dadurch ausgelöst wird, dass wenigstens eine Ausführungseinheit ihren internen Zustand wechselt.

Vorteilhafterweise verwendet man eine Vorrichtung, bei der die Umschaltmittel so gestaltet sind, dass eine Umschaltung dadurch ausgelöst wird, dass wenigstens eine Ausführungseinheit in eine andere Gruppe der Zustände wechselt.

Vorteilhafterweise verwendet man eine Vorrichtung, bei der ein Speicher oder Speicherbereich, insbesondere ein Register, enthalten ist und der Zustand durch wenigstens ein Bit in einem Register dieser Ausführungseinheit angezeigt wird.

Vorteilhafterweise verwendet man eine Vorrichtung, bei der Mittel vorhanden sind, die die Zustände der wenigstens zwei Ausführungseinheiten mit abgespeicherten Kombinationen vergleichen und abhängig vom Vergleichsergebnis ein Umschaltsignal zur Umschaltung der Betriebsmodi des Rechnersystems erzeugen.

Vorteilhafterweise verwendet man eine Vorrichtung, bei der Mittel zur Speicherung von Daten vorhanden sind und dort Referenzwerte für die Kombination der Zustände abgespeichert sind, bei denen eine Umschaltung der Betriebsmodi erfolgen soll.

Vorteilhafterweise verwendet man ein Rechnersystem mit einer oben beschriebenen Vorrichtung.

Vorteilhafterweise verwendet man ein Rechnersystem bei dem die Ausführungseinheit, die durch einen Wechsel ihres Zustandes eine Umschaltung initiiert, ein Signal erzeugt, welches die Umschaltung der wenigstens einen weiteren Ausführungseinheit triggert.

Weitere Vorteile und vorteilhafte Ausgestaltungen ergeben sich aus den Merkmalen der Ansprüche sowie der Beschreibung.

### Figuren

- In Figur 1: ist ein Multiprozessorsystem mit zwei Ausführungseinheiten und einer Um- schalt- und Vergleichseinheit gezeigt
- In Figur 2: ist ein Multiprozessorsystem mit zwei Ausführungseinheiten und einer zusätz- lichen Signalverbindung zwischen diesen Ausführungseinheiten gezeigt
- In Figur 3: ist ein Multiprozessorsystem mit zwei Ausführungseinheiten und einer weite- ren Vergleichseinheit zum Vergleich der Prozessorzustandsinformationen ge- zeigt
- In Figur 4: ist eine Vergleichseinheit zum Vergleich der Prozessorzustandsinformationen gezeigt
- Figur 5: zeigt ein Zustandsdiagramm eines Multiprozessorsystems mit zwei Zuständen und vier Übergangsbedingungen
- In Figur 6: ist ein Multiprozessorsystem mit externem Umschaltwunschsignal gezeigt.
- Figur 7: zeigt eine allgemeine Umschalt- und Vergleichseinheit für ein Multiprozessor- system

### Beschreibung der Ausführungsbeispiele

Als Ausführungseinheit kann im Folgenden sowohl ein Prozessor, ein Core, eine CPU, als auch eine FPU (Floating Point Unit), ein DSP (Digitaler Signalprozessor), ein Coprozessor oder eine ALU (Arithmetic logical Unit) bezeichnet werden.

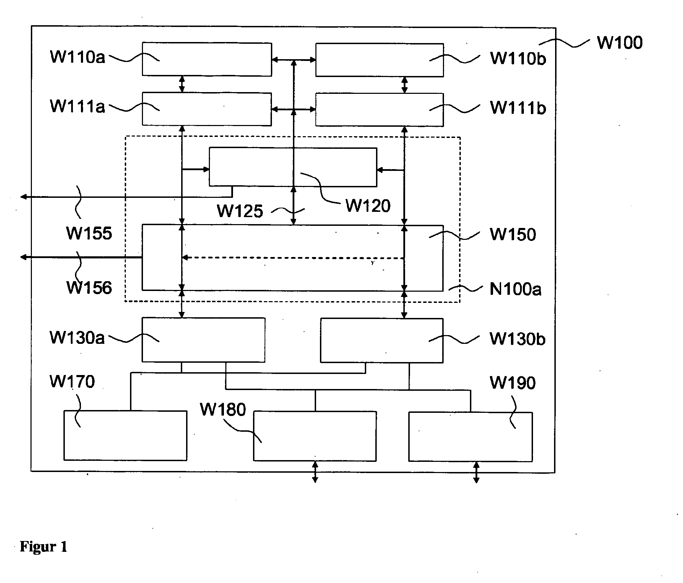

Gegenstand der Erfindung ist ein in Figur 1 dargestelltes Multiprozessorsystem (W100) mit wenigstens zwei Ausführungseinheiten (W110a, W110b), einer Vergleichseinheit (W120) und einer Umschalteinheit (W150). Die Ausführungseinheiten sind jeweils über einen optionalen Zwischenspeicher (W111a, W111b) mit einer Vergleichseinheit (W120) und der Umschalteinheit (W150) verbunden. Die Umschalteinheit (W 150) hat wenigstens zwei Ausgänge zu zwei Systemschnittstellen (W130a, W130b). Über diese Schnittstellen können Register, Speicher oder Peripherals wie Digitale Ausgänge, D/A-Wandler, Kommunikationscontroller angesteuert werden.

Dieses Multiprozessorsystem kann in wenigstens zwei Betriebsmodi betrieben werden, einem Vergleichsmodus VM und einem Performanzmodus PM.

Im Performanzmodus werden in den unterschiedlichen Ausführungseinheiten unterschiedliche Befehle, Programmsegmente oder Programme parallel ausgeführt. In diesem Betriebsmodus ist die Vergleichseinheit deaktiviert. Die Umschalteinheit (W150) ist in diesem Betriebsmodus so konfiguriert, dass jede Ausführungseinheit über den optionalen Zwischenspeicher mit einer der Systemschnittstellen (W130a, W130b) verbunden ist. Über die Systemschnittstellen kann ein Resultat einer Ausführungseinheit in einen Speicher (W170) geschrieben werden oder auf einen Peripheriebaustein (W180, W190) ausgegeben werden. Ein Peripheriebaustein kann z.B. ein Analog-Digital-Wandler oder ein Kommunikationscontroller eines Kommunikationssystems (z.B. SPI, LIN, CAN, FlexRay) sein.

Zur Deaktivierung der Vergleichseinheit gibt es mehrere Möglichkeiten. Zum einen kann man an den Vergleicher ein Signal führen (z.B. über die Verbindung W125), mit dem dieser aktiviert oder deaktiviert wird. Dazu ist im Vergleicher eine zusätzliche Logik einzufügen, die dies durchführen kann. Eine weitere Möglichkeit ist es, dem Vergleicher keine zu vergleichenden Daten zuzuführen. Eine dritte Möglichkeit ist es, auf Systemebene das Fehlersignal (W155) des Vergleichers zu ignorieren. Weiter kann man auch das Fehlersignal selbst unterbrechen. Allen Möglichkeiten ist gemeinsam, dass sie im System einen Zustand erzeugen, bei dem es keine Rolle spielt, wenn zwei oder mehr Daten, die potenziell verglichen werden, verschieden sind. Wird dieser Zustand durch eine Maßnahme im Vergleicher oder dessen Ein- oder Ausgangssignalen erreicht, dann wird der Vergleicher als passiv oder deaktiviert bezeichnet.

Im Vergleichsmodus werden in beiden Ausführungseinheiten (W110a, W110b) gleiche oder gleichartige Befehle, Programmsegmente oder Programme abgearbeitet. Über die optionalen Zwischenspeicher (W111a, W111b) werden die Ausgangssignale der Ausführungseinheiten an die Vergleichseinheit (W120) und an die Umschalteinheit (W150) geführt. In der Vergleichseinheit werden die beiden Daten auf Übereinstimmung geprüft. Nach erfolgtem Vergleich wird der Umschalteinheit über ein Statussignal (W125) mitgeteilt, ob diese eines der übereinstimmenden Ergebnisse an eine der Systemschnittstellen ausgeben darf oder ob sie aufgrund einer erkannten Diskrepanz der Ergebnisse das Signal sperren muss. In diesem Fall kann von der Vergleichseinheit ein optionales Fehlersignal (W155) ausgegeben werden. Dieses Fehlersignal kann anstatt von der Vergleichseinheit auch von der Umschalteinheit ausgegeben werden (W156). Die Vergleichseinheit (W120) und die Umschalteinheit (W150) können auch zu einer kombinierten Umschalt- und Vergleichseinheit (N100a) zusammengefasst werden.

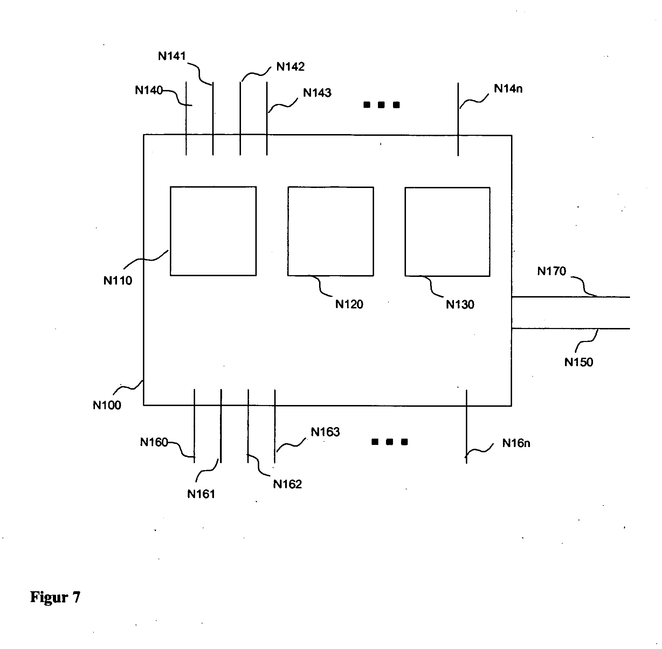

Ein allgemeiner Fall der Umschalt- und Vergleichskomponente, auch für die Verwendung für mehr als zwei Ausführungseinheiten, ist in Figur 7 gezeigt. Von den n zu berücksichtigenden Ausführungseinheiten gehen n Signale N140,..., N14n an die Umschalt- und Vergleichskomponente N100 (entspricht 100a). Diese kann bis zu n Ausgangssignale N160,..., N16n aus diesen Eingangssignalen erzeugen. Im einfachsten Fall, dem "reinen Performanzmodus", werden alle Signale N14i auf die entsprechenden Ausgangssignale N16i geleitet. Im entgegen gesetzten Grenzfall, dem "reinen Vergleichsmodus" werden alle Signale N140,..., N14n nur auf genau eines der Ausgangssignale N16i geleitet.

In einem System mit n Ausführungseinheiten und n > 2 sind mehr als nur zwei Betriebsmodi denkbar. Anhand Figur 7 lässt sich darlegen, wie die verschiedenen denkbaren Modi entstehen können. Dazu ist in dieser Figur die logische Komponente einer Schaltlogik N 110 enthalten. Diese Komponente muss nicht als eigene Komponente vorhanden sein. Entscheidend ist, dass die beschriebenen Funktionen im System realisiert sind. Die Schaltlogik N110 legt zunächst fest, wie viele Ausgangssignale es überhaupt gibt. Weiter legt sie fest, welche der Eingangssignale zu welchem der Ausgangssignale beitragen. Dabei kann ein Eingangssignal zu genau einem Ausgangssignal beitragen. In mathematischer Form anders formuliert ist also durch die Schaltlogik eine Funktion defmiert, die jedem Element der Menge {N140,..., N14n} ein Element der Menge {N160,..., N16n} zuordnet.

Die Verarbeitungslogik N120 legt dann zu jedem der Ausgänge N16i fest, in welcher Form die Eingänge zu diesem Ausgangsignal beitragen. Auch diese Komponente muss nicht als eigene Komponente vorhanden sein. Entscheidend ist wieder, dass die beschriebenen Funktionen im System realisiert sind. Um beispielhaft die verschiedenen Variationsmöglichkeiten zu beschreiben, sei ohne Beschränkung der Allgemeinheit angenommen, dass der Ausgang N160 durch die Signale N141, ..., N14m erzeugt wird. Falls m = 1 entspricht dies einfach einer Durchschaltung des Signals, falls m = 2 dann werden die Signale N141, N142 verglichen. Dieser Vergleich kann synchron oder asynchron durchgeführt werden, er kann bitweise oder nur auf signifikante Bits oder auch mit einem Toleranzband durchgeführt werden.

Die Konfiguration der Umschalt- und Vergleichseinheit (N100) ist je nach Priorität der Systemkomponenten abhängig vom Betriebsmodus des Multiprozessorsystems oder definiert diesen. Um innerhalb des Systems eine konsistente Information über den Betriebsmodus sicherzustellen und diesen gegebenenfalls externen Einheiten mitzuteilen, ist es vorteilhaft, die Information über den Betriebsmodus in einer der Systemkomponenten zu identifizieren und in einem oder mehreren Signalen zur Verfügung zu stellen.

In einer bevorzugten Implementierung kann dieses Signal in der Umschalt- und Vergleichseinheit erzeugt werden und als Modussignal N 150 anderen Teilen des Systems zur Verfügung gestellt werden. Darüber hinaus ist ein Fehlersignal N170 in dieser Figur eingezeichnet. Das optionale Fehlersignal wird von der Fehlerschaltungslogik N130, die die Fehlersignale sammelt, generiert und ist entweder eine direkte Weiterleitung der Einzelfehlersignale oder eine Bündelung der darin enthaltenen Fehlerinformation. Das Modussignal N150 ist optional, seine Verwendung außerhalb dieser Komponente kann aber an vielen Stellen vorteilhaft verwendet werden. Die Kombination der Information der Schaltlogik N 110 (d.h. die o. g. Funktion) und der Verarbeitungslogik (d.h. die Festlegung der Vergleichsoperation pro Ausgangssignal, d.h. pro Funktionswert) ist die Modusinformation und diese legt den Betriebsmodus des Multiprozessorsystems fest bzw. spiegelt diesen wider. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Das Modussignal bringt dann die relevante Modusinformation nach außen. Eine HW-Implementierung ist vorzugsweise so dargestellt, dass das extern sichtbare Modussignal konfiguriert werden kann. Vorzugsweise sind ebenfalls die Verarbeitungslogik und die Schaltlogik konfigurierbar gestaltet. Vorzugsweise sind diese Konfigurationen aufeinander abgestimmt. Alternativ kann man auch nur oder ergänzend Änderungen des Modussignals nach außen geben. Dies hat insbesondere in einer Zweierkonfiguration Vorteile.

Die Grundidee dieser Erfindung ist es, dass die Betriebsmodi des Multiprozessorsystems in irgendeiner Art gekoppelt werden mit den Prozessorzuständen. Dies kann auch präziser formuliert werden:

Gemäß den kennzeichnenden Merkmalen des Anspruchs 1 hängt in der vorliegenden Erfindung die Umschaltung selbst oder die Freigabe für eine Umschaltung zwischen den wenigstens zwei Betriebsmodi des Multiprozessorsystems ab von dem internen Prozessorzustand wenigstens einer Ausführungseinheit (z.B. User-Mode, Interrupt-Mode) oder von dem Wechsel des internen Prozessorzustands wenigstens einer Ausführungseinheit.

Die Art und Anzahl möglicher Prozessorzustände ist abhängig vom Prozessortyp. Gängige Prozessorzustände sind z.B. Init-Mode (Initialisierung), User-Mode (Prozessorzustand, in dem die meisten Anwendungs-Tasks abgearbeitet werden), Supervisor-Mode (z.B. bei Reset und SW-Interrupt), Interrupt-Mode (bei Interrupt request), Abort-Mode (z.B. zur Behandlung von Speicherzugriffsverletzungen) und System-Mode (privilegierter Modus, in dem Betriebssystembefehle abgearbeitet werden). Der aktuelle Prozessorzustand wird durch wenigstens ein Bit im Prozessorstatusregister oder durch ein prozessorinternes Signal angezeigt.

Die Umschaltung zwischen den verschiedenen Prozessorzuständen der Ausführungseinheiten erfolgt dabei auf bekannte Weise durch Setzen eines Bits im Prozessorstatusregister, durch einen expliziten Befehl oder implizit durch Ausführung bestimmter Instruktionen oder durch externe bzw. interne Ereignisse (wie z.B. Fehler, Speicherzugriffsverletzungen, Reset, Interrupt, SW-Interrupt, Auslösung von Betriebssystemroutinen).

Die einzelnen Ausführungseinheiten eines Multiprozessorsystems können sich im Performanzmodus zu einem Zeitpunkt T1 in unterschiedlichen Prozessorzuständen befinden. Die Umschaltung zwischen den Betriebsmodi des Multiprozessorsystem kann in einem solchen System in Abhängigkeit von einem internen Prozessorzustand genau einer dedizierten Ausführungseinheit, einem internen Prozessorzustand einer beliebigen Ausführungseinheit des Systems, einer bestimmten Kombination der internen Prozessorzustände von wenigstens zwei Ausführungseinheiten erfolgen.

Ist die Umschaltung zwischen zwei Betriebsmodi oder die Freigabe für eine Umschaltung zwischen den wenigstens zwei Betriebsmodi des Multiprozessorsystems abhängig von dem internen Prozessorzustand oder von dem Wechsel des internen Prozessorzustands genau einer Ausführungseinheit, so muss diese Ausführungseinheit ein Umschaltsignal erzeugen, mittels dessen die Umschaltung der wenigstens einen weiteren Ausführungseinheit getriggert wird.

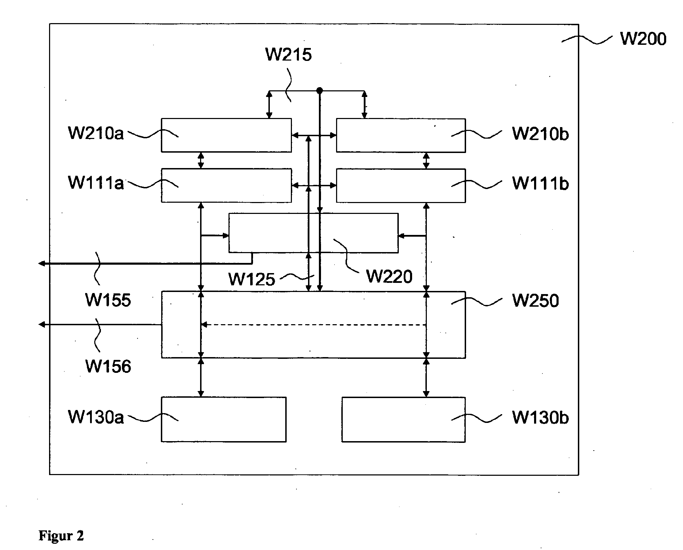

In Figur 2 ist ein Multiprozessorsystem W200 gezeigt, das auf dem bereits bekannten, in Figur 1 gezeigten Multiprozessorsystem W 100 basiert. Das Multiprozessorsystem enthält in der in Figur 2 gezeigten Ausführungsform zwei Ausführungseinheiten (W210a, W210b), die jeweils über einen optionalen Zwischenspeicher (W111a, W111b) mit einer Vergleichseinheit (W220) und einer Umschalteinheit (W250) verbunden sind. Neu gegenüber dem System W100 ist im System W200 der Signalpfad W215, über den jeweils die Ausführungseinheit, deren interner Prozessorzustand einen Wechsel zwischen den zwei Betriebsmodi initiiert, ein Umschaltsignal an die andere Ausführungseinheit, an die Vergleichseinheit (W220) und an die Umschalteinheit (W250) liefert. Wie bereits in Figur 1 gezeigt, können auch hier die Vergleichseinheit (W220) und die Umschalteinheit (W250) zu einer Umschalt- und Vergleichseinheit kombiniert werden.

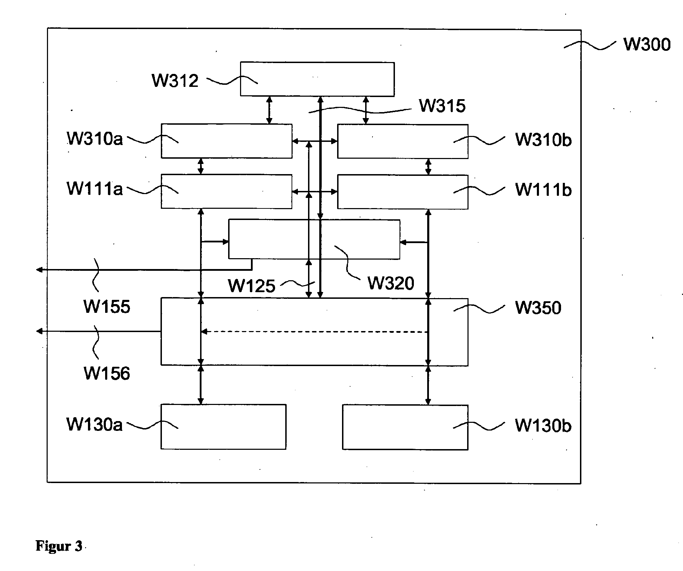

In Figur 3 ist ein Multiprozessorsystem W300 mit zwei Ausführungseinheiten (W310a, W310b) und einer zusätzlichen Einheit W312 gezeigt. Figur 3 basiert wieder auf Figur 1, es werden jetzt die Änderungen beschrieben. Ein solches System ist notwendig, wenn die Umschaltung zwischen zwei Betriebsmodi in Abhängigkeit einer bestimmten Kombination der internen Prozessorzustände von wenigstens zwei Ausführungseinheiten erfolgt. Die Einheit W312 liest dabei die relevanten internen Prozessorzustände der Ausführungseinheiten oder erhält sie von diesen und vergleicht die aktuelle Kombination der Prozessorzustände mit einer oder mehreren abgespeicherten Kombinationen. Bei Übereinstimmung initiiert die Einheit W312 eine Umschaltung des Betriebsmodus und sendet dazu ein entsprechendes Signal an die Ausführungseinheiten und über den Signalpfad W315 an die Vergleichseinheit (W320) und an die Umschalteinheit (W350).

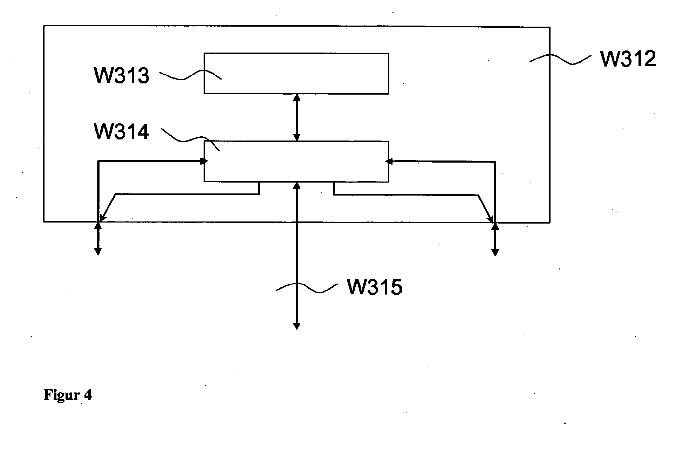

In Figur 4 ist ein Ausführungsbeispiel des internen Aufbaus der Einheit W312 dargestellt. In einem Speicher W313, der z.B. als Register, RAM, Flash, ROM oder EEPROM realisiert sein kann, sind bestimmte Kombinationen von internen Prozessorzuständen der Ausführungseinheiten gespeichert, bei denen eine Umschaltung der Betriebsmodi vorgenommen werden soll bzw. die mit einem bestimmten Betriebsmodus gekoppelt sind. In einem Vergleicher W314 werden zyklisch oder auf Anforderung durch ein Signal W315 die aktuellen Prozessorzustände der Ausführungseinheiten mit den gespeicherten Mustern verglichen. Ist das Ergebnis des Vergleichs eine Anforderung zur Umschaltung, so generiert die Einheit W314 ein Umschaltsignal, das an die Ausführungseinheiten gesendet und über den Signalpfad W315 an die Vergleichseinheit und an die Umschalteinheit gesendet wird.

Im erfindungsgemäßen System werden die internen Prozessorzustände wenigstens einer Ausführungseinheit in wenigstens zwei Gruppen P1 und P2 eingeteilt und/oder die Kombinationen der Prozessorzustände in wenigstens zwei Gruppen PZ1 und PZ2 eingeteilt. In einem bevorzugten Ausführungsbeispiel kann wenigstens einer dieser Gruppen von Prozessorzuständen oder Prozessorzustandskombinationen ein dedizierter Betriebsmodus (d.h. ein bestimmter Performanzmodus oder Vergleichsmodus) zugeordnet sein.

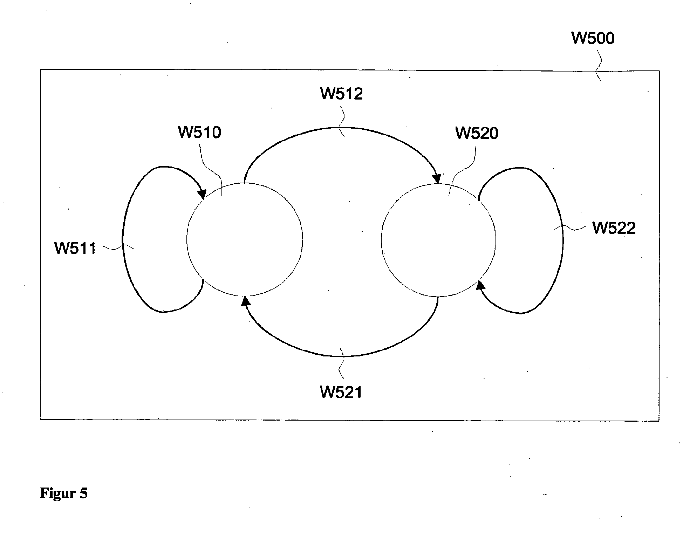

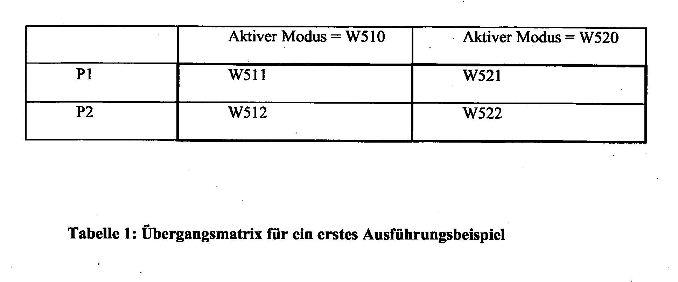

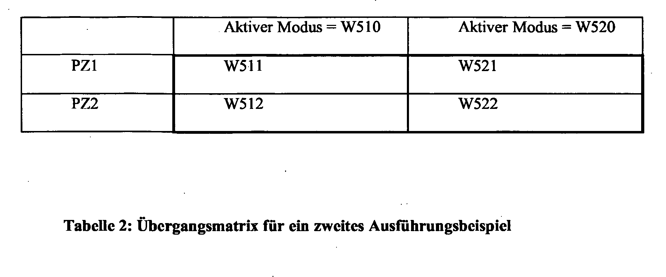

In Figur 5 ist ein Zustandsdiagramm eines beispielhaften Systems mit den zwei Betriebsmodi W510 und W520 dargestellt. In diesem System gibt es vier Übergangsbedingungen W511, W512, W521 und W522. Dabei bewirken die Übergangsbedingungen W512 und W521 einen Wechsel des Betriebsmodus, die Übergangsbedingungen W511 und W522 bewirken einen Verbleib des Systems im aktuellen Betriebsmodus.

In einem ersten Ausführungsbeispiel sind die Übergangsbedingungen W511, W512, W521, W522 ausschließlich von dem Prozessorzustand einer ersten Ausführungseinheit und den Betriebsmodi des Prozessorsystems abhängig. In der Tabelle 1 ist eine Übergangsmatrix dargestellt für den beispielhaften Fall, dass die Prozessorzustände der Gruppe P1 mit dem Betriebsmodus W510 gekoppelt sind und die Prozessorzustände der Gruppe P2 mit dem Betriebsmodus W520 gekoppelt sind. In diesem Ausführungsbeispiel ist jeder Prozessorzustand einer ersten Ausführungseinheit einer Gruppe P1 oder P2 zugeordnet. Die Prozessorzustände der zweiten und gegebenenfalls weiterer Ausführungseinheiten werden dabei nicht als Umschaltbedingungen herangezogen. Dieses Ausführungsbeispiel kann auch so modifiziert werden, dass anstelle des Prozessorzustandes einer dedizierten Ausführungseinheit der Prozessorzustand einer beliebigen Ausführungseinheit als Umschaltbedingung herangezogen wird.

In einem zweiten Ausführungsbeispiel sind die Übergangsbedingungen W511 - W522 ausschließlich von den Kombinationen der internen Prozessorzustände und den Betriebsmodi des Prozessorsystems abhängig. In der Tabelle 2 ist eine Übergangsmatrix dargestellt für den beispielhaften Fall, dass die Prozessorzustandskombinationen der Gruppe PZ1 mit dem Betriebsmodus W510 gekoppelt sind und die Prozessorzustandskombinationen der Gruppe PZ2 mit dem Betriebsmodus W520 gekoppelt sind. In diesem Ausführungsbeispiel ist jede Kombination der Zustände der wenigstens zwei Ausführungseinheiten einer Gruppe PZ1 oder PZ2 zugeordnet.

In einem dritten Ausführungsbeispiel ist die Umschaltung zwischen den Betriebsmodi von dem Prozessorzustand einer ersten Ausführungseinheit abhängig. Die möglichen Prozessorzustände dieser Ausführungseinheit sind in drei Gruppen P1, P2 und P3 eingeteilt. Den Prozessorzuständen der Gruppe P 1 ist fest ein erster Betriebsmodus zugeordnet, den Prozessorzuständen der Gruppe P2 ist ein zweiter Betriebsmodus zugeordnet und in einer optionalen Gruppe P3 von Prozessorzuständen ist eine Umschaltung zwischen den Betriebsmodi (z.B. getriggert durch ein externes Signal) erlaubt. So gehört jeder Prozessorzustand einer ersten Ausführungseinheit genau zu einer Gruppe P1, P2 oder P3. Die Prozessorzustände der zweiten und gegebenenfalls weiterer Ausführungseinheiten werden dabei nicht als Umschaltbedingungen herangezogen. Dieses Ausführungsbeispiel kann auch so modifiziert werden, dass anstelle des Prozessorzustandes einer dedizierten Ausführungseinheit der Prozessorzustand einer beliebigen Ausführungseinheit als Umschaltbedingung herangezogen wird.

In einem vierten Ausführungsbeispiel ist den Prozessorzustandskombinationen der Gruppe PZ1 fest ein erster Betriebsmodus zugeordnet, den Prozessorzustandskombinationen der Gruppe PZ2 ist ein zweiter Betriebsmodus zugeordnet und in einer optionalen Gruppe PZ3 von Prozessorzustandskombinationen ist eine Umschaltung zwischen den Betriebsmodi (z.B. getriggert durch ein externes Signal) erlaubt. So gehört jede Prozessorzustandskombination genau zu einer Gruppe PZ1, PZ2 oder PZ3: es gibt im System keine Prozessorzustandskombination, die nicht zu einer dieser Gruppen gehört.

Die vier beschriebenen Ausführungsbeispiele können auch dahingehend erweitert werden, dass die jeweiligen Prozessorzustände bzw. Prozessorzustandskombinationen keine direkte Umschaltung, sondern nur eine Freigabe einer Umschaltung bewirken. Die Umschaltung selbst wird dann entweder durch ein externes Signal vorgenommen, per Software gesteuert oder - wie aus dem Stand der Technik bekannt - durch den Zugriff auf spezielle Speicherbereiche initiiert. Kennzeichnend dabei ist, dass diese Umschaltwünsche nur dann umgesetzt werden, wenn zuvor eine Freigabe der Umschaltung in Abhängigkeit der Prozessorzustände bzw. Prozessorzustandskombinationen erfolgt ist.

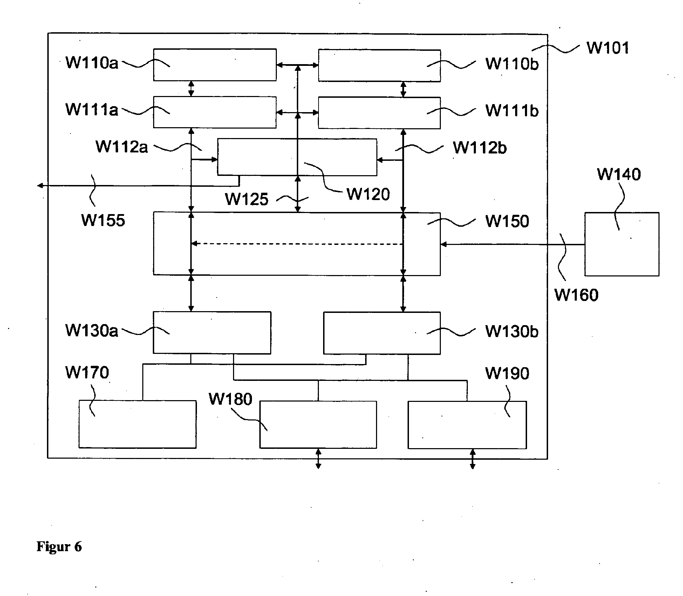

Figur 6 beschreibt die Umschaltung durch ein externes Signal und basiert wieder auf Figur 1. Es werden nur die Änderungen beschrieben. Zum Gesamtsystem, hier mit W101 bezeichnet, kommt ein externes Signal W160 hinzu, das von einer externen Signalquelle W140 stammt.

In einem beispielhaften Ausführungsbeispiel ist der User-Mode wenigstens einer Ausführungseinheit mit dem Performanzmodus gekoppelt. Im Vergleichsmodus wird das Multiprozessorsystem ausschließlich in Verbindung mit dem Init-Mode (beim Start-Up) und/oder dem Supervisor-Mode (bei SW-Interrupts und Reset) und/oder dem Abort-Mode betrieben. Im Vergleichsmodus ist es allerdings erforderlich, dass alle Ausführungseinheiten den gleichen Prozessorzustand einnehmen. Die Synchronisation der Prozessorzustände erfolgt dabei bei der Umschaltung des Betriebsmodus des Multiprozessorsystems. Diese Umschaltung erfolgt dabei in Abhängigkeit wenigstens eines Bits oder eines Bitmusters des Prozessorstatusworts wenigstens einer Ausführungseinheit, welches einen Prozessorzustand dieser Ausführungseinheit anzeigt.

In einem weiteren beispielhaften Ausführungsbeispiel ist der User-Mode mit dem Vergleichsmodus gekoppelt. Nur in Verbindung mit wenigstens einem dedizierten Prozessorzustand (z.B. Init-Mode und/oder Supervisor-Mode und/oder Abort-Mode) wird das Multiprozessorsystem in den Performanzmodus umgeschaltet, um eine spezielle Aufgabe schneller abarbeiten zu können.

In einem weiteren Ausführungsbeispiel wird eine Umschaltung zwischen den Betriebsmodi generell nur dann zugelassen, wenn sich wenigstens eine Ausführungseinheit in einem privilegierten Prozessorzustand (z.B. Supervisor Mode) befindet. Aus Sicherheitsgründen kann eine Umschaltung auch nur dann zugelassen werden, wenn sich alle Ausführungseinheiten in einem privilegierten Mode befinden. Die Umschaltung selbst kann dann nach erfolgter Freigabe durch ein in den oben beschriebenen Ausführungsbeispielen dargestelltes Verfahren, durch ein in Figur 6 gezeigtes externes Umschaltsignal W160, durch Software gesteuert oder durch Zugriff einer Ausführungseinheit auf spezielle Speicherbereiche erfolgen.

## Patentansprüche

1. Verfahren zur Steuerung eines Rechnersystems mit wenigstens zwei Ausführungseinheiten und mit wenigstens zwei Gruppen von internen Prozessorzuständen, in den Ausführungseinheiten, und mit Umschattmitteln, durch welche zwischen wenigstens einem Performanzmodus wo die wenigstens zwei Ausführungseinheiten unterschiedliche Programme, Programmsegmente oder Befehle ausführen und einem Vergleichsmodus wo die wenigstens zwei Ausführungseinheiten redundant und taktsynchron das gleicke Programmsegment ausführen und die Ergebnisse verglichen werden, des Rechnersystems umgeschaltet werden kann, **dadurch gekennzeichnet, dass** das Rechnersystem im Vergleichsmodus betrieben wird wenn die wenigstens zwei Ausführungseinheiten in einem User Mode, d.h. in einem Prozessorzustand, in dem Anwenderprogramme abgearbeitet werden, betrieben werden und dass eine Umschaltung des Rechnersystems in den Performanzmodus durch einen Wechsel des Prozessorzustandes vom User Mode in einen anderen Betriebszustand in wenigstens einer Ausführungseinheit getriggert wird.

2. Verfahren zur Steuerung eines Rechnersystems nach Anspruch 1, **dadurch gekennzeichnet, dass** die Ausführungseinheit, die durch einen Wechsel ihres Zustands eine Umschaltung initiiert, ein Signal erzeugt, welches die Umschaltung der wenigstens einen weiteren Ausführungseinheit triggert.

3. Verfahren zur Steuerung eines Rechnersystems nach Anspruch 1, **dadurch gekennzeichnet, dass** die Zustände mit abgespeicherten Referenzwerten verglichen werden und abhängig vom Vergleich Umschaltsignale erzeugt werden.

4. Verfahren zur Steuerung eines Rechnersystems nach Anspruch 4, **dadurch gekennzeichnet, dass** der Vergleich zyklisch erfolgt

5. Verfahren zu Steuerung eines Rechnersystems nach Anspruch 4, **dadurch gekennzeichnet, dass** der Vergleich immer bei Änderung eines Zustands erfolgt

6. Verfahren nach Anspruch 1, **dadurch gekennzeichnet, dass** der interne Zustand einer Ausführungseinheit durch wenigstens ein Bit in einem Register dieser Ausführungseinheit angezeigt wird.

7. Vorrichtung zur Steuerung eines Rechnersystems mit wenigstens zwei Ausführungseinheiten und mit wenigstens zwei Gruppen von internen Zuständen, insbesondere Prozessorzuständen, in wenigstens einer der Ausführungseinheiten, und mit Umschaltmitteln, durch welche zwischen einem Performanzmodus wo die wenigstens zwei Ausführungseinheiten unterschiedliche Programme, Programmsegmente oder Befehle ausführen und einem Vergleichsmodus wo die wenigstens zwei Ausführungseinheiten redundant und taktsynchron das gleicke Programmsegment ausführen und die Ergebnisse verglichen werden, des Rechnersystems umgeschaltet werden kann, **dadurch gekennzeichnet, dass** die Umschaltmittel derart ausgestaltet sind, dass das Rechnersystem im Vergleichsmodus betrieben wird wenn die wenigstens zwei Ausführungseinheiten in einem User Mode, d.h. in einem Prozessorzustand, in dem Anwenderprogramme abgearbeitet werden, betrieben werden, und dass eine Umschaltung **dadurch** ausgelöst wird, dass wenigstens eine Ausführungseinheit ihren internen Zustand wechselt.

8. Vorrichtung nach Anspruch 7, **dadurch gekennzeichnet, dass** die Umschaltmittel so gestaltet sind, dass eine Umschaltung **dadurch** ausgelöst wird, dass wenigstens eine Ausführungseinheit in eine andere Gruppe der Zustände wechselt.

9. Vorrichtung nach Anspruch 7, **dadurch gekennzeichnet, dass** ein Speicher oder Speicherbereich, insbesondere ein Register, enthalten ist und der Zustand durch wenigstens ein Bit in einem Register dieser Ausführungseinheit angezeigt wird.

10. Rechnersystem mit einer Vorrichtung nach Anspruch 7.

11. Rechnersystem nach Anspruch 10, **dadurch gekennzeichnet, dass** die Ausführungseinheit, die durch einen Wechsel ihres Zustandes eine Umschaltung initiiert, ein Signal erzeugt, welches die Umschaltung der wenigstens einen weiteren Ausführungseinheit triggert.

## Claims

1. Method for controlling a computer system having at least two execution units and at least two groups of internal processor states in the execution units and having changeover means which can be used to change over between at least a performance mode, in which the at least two execution units execute different programs, program segments or instructions, and a comparison mode, in which the at least two execution units execute the same program segment in a redundant and synchronous manner and the results are compared, of the computer system, **characterized in that** the computer system is operated in the comparison mode if the at least two execution units are operated in a user mode, that is to say in a processor state in which user programs are executed, and **in that** a changeover of the computer system to the performance mode is triggered by the processor state changing from the user mode to another operating state in at least one execution unit.

2. Method for controlling a computer system according to Claim 1, **characterized in that** the execution unit which initiates a changeover by changing its state generates a signal which triggers the changeover of the at least one further execution unit.

3. Method for controlling a computer system according to Claim 1, **characterized in that** the states are compared with stored reference values and changeover signals are generated on the basis of the comparison.

4. Method for controlling a computer system according to Claim 4, **characterized in that** the comparison is carried out cyclically.

5. Method for controlling a computer system according to Claim 4, **characterized in that** the comparison is always carried out when a state changes.

6. Method according to Claim 1, **characterized in that** the internal state of an execution unit is indicated by at least one bit in a register of this execution unit.

7. Device for controlling a computer system having at least two execution units and at least two groups of internal states, in particular processor states, in at least one of the execution units and having changeover means which can be used to change over between a performance mode, in which the at least two execution units execute different programs, program segments or instructions, and a comparison mode, in which the at least two execution units execute the same program segment in a redundant and synchronous manner and the results are compared, of the computer system, **characterized in that** the changeover means are configured in such a manner that the computer system is operated in the comparison mode if the at least two execution units are operated in a user mode, that is to say in a processor state in which user programs are executed, and **in that** a changeover is triggered by at least one execution unit changing its internal state.

8. Device according to Claim 7, **characterized in that** the changeover means are configured in such a manner that a changeover is triggered by at least one execution unit changing to another group of states.

9. Device according to Claim 7, **characterized in that** a memory or memory area, in particular a register, is included and the state is indicated by at least one bit in a register of this execution unit.

10. Computer system having a device according to Claim 7.

11. Computer system according to Claim 10, **characterized in that** the execution unit which initiates a changeover by changing its state generates a signal which triggers the changeover of the at least one further execution unit.

## Revendications

1. Procédé de commande d'un système informatique comprenant au moins deux unités d'exécution et comprenant au moins deux groupes d'états de processeur internes dans les unités d'exécution et comprenant des moyens de permutation qui permettent de permuter le système informatique entre au moins un mode performant, dans lequel les au moins deux unités d'exécution exécutent des programmes, des segments de programme ou des instructions différents, et un mode de comparaison, dans lequel les au moins deux unités d'exécution exécutent le même segment de programme de manière redondante et avec synchronisation de l'horloge et les résultats sont comparés, **caractérisé en ce que** le système informatique fonctionne en mode de comparaison lorsque les au moins deux unités d'exécution fonctionnent dans un mode d'utilisateur, c'est-à-dire dans un état du processeur dans lequel sont traités des programmes d'utilisateur, et qu'une permutation du système informatique dans le mode performant est déclenchée par un changement de l'état du processeur du mode d'utilisateur dans un autre état de fonctionnement dans au moins une unité d'exécution.

2. Procédé de commande d'un système informatique selon la revendication 1, **caractérisé en ce que** l'unité d'exécution qui initie une permutation par un changement de son état génère un signal qui déclenche la permutation de l'au moins une autre unité d'exécution.

3. Procédé de commande d'un système informatique selon la revendication 1, **caractérisé en ce que** les états sont comparés avec des valeurs de référence mémorisées et des signaux de permutation sont générés en fonction de la comparaison.

4. Procédé de commande d'un système informatique selon la revendication 4, **caractérisé en ce que** la comparaison s'effectue de manière cyclique.

5. Procédé de commande d'un système informatique selon la revendication 4, **caractérisé en ce que** la comparaison s'effectue toujours lors de la modification d'un état.

6. Procédé selon la revendication 1, **caractérisé en ce que** l'état interne d'une unité d'exécution est indiqué par au moins un bit dans un registre de cette unité d'exécution.

7. Dispositif de commande d'un système informatique comprenant au moins deux unités d'exécution et comprenant au moins deux groupes d'états internes, notamment d'états de processeur, dans au moins l'une des unités d'exécution et comprenant des moyens de permutation qui permettent de permuter le système informatique entre au moins un mode performant, dans lequel les au moins deux unités d'exécution exécutent des programmes, des segments de programme ou des instructions différents, et un mode de comparaison, dans lequel les au moins deux unités d'exécution exécutent le même segment de programme de manière redondante et avec synchronisation de l'horloge et les résultats sont comparés, **caractérisé en ce que** les moyens de permutation sont configurés de telle sorte que le système informatique fonctionne en mode de comparaison lorsque les au moins deux unités d'exécution fonctionnent dans un mode d'utilisateur, c'est-à-dire dans un état du processeur dans lequel sont traités des programmes d'utilisateur, et qu'une permutation est déclenchée par le fait qu'au moins une unité d'exécution change son état interne.

8. Dispositif selon la revendication 7, **caractérisé en ce que** les moyens de permutation sont configurés de telle sorte qu'une permutation est déclenchée par le fait qu'au moins une unité d'exécution change dans un autre groupe d'états.

9. Dispositif selon la revendication 7, **caractérisé en ce qu'**il inclut une mémoire ou une zone de mémoire, notamment un registre, et l'état est indiqué par au moins un bit dans un registre de cette unité d'exécution.

10. Système informatique muni d'un dispositif selon la revendication 7.

11. Système informatique selon la revendication 10, **caractérisé en ce que** l'unité d'exécution qui initie une permutation par un changement de son état génère un signal qui déclenche la permutation de l'au moins une autre unité d'exécution.
